# EUROPEAN PATENT APPLICATION

(11) **EP 4 318 319 A1**
(43) Date of publication of application: **07.02.2024**
(21) Application number: 22794258.8
(22) Date of filing: 08.02.2022
(51) Int. Cl.: G06N 3/06

(54) **MODEL PROCESSING METHOD AND APPARATUS**

(30) Priority: 26.04.2021 CN 202110454504
(71) Applicant: Huawei Technologies Co., Ltd., Longgang Shenzhen, Guangdong 518129 (CN)
(72) Inventor: HE, Ke, Shenzhen, Guangdong 518129 (CN)
(74) Representative: Huawei European IPR
(86) International application number: PCT/CN2022/075492
(87) International publication number: WO 2022/227777

(57) **Abstract**

This application provides a model processing method and apparatus in the field of artificial intelligence. This application is used to resolve a problem that an existing AI framework is not flexible enough. The method mainly includes: obtaining a machine learning model, where the machine learning model includes a flag bit; determining an operator queue of a first operator in the machine learning model, where the first operator is an operator corresponding to the flag bit in the machine learning model; determining a first computational graph of the operator queue; and training the machine learning model based on the first computational graph. This application is applied to training of the machine learning model.

## Description

This application claims priority to Chinese Patent Application No. 202110454504.0, filed with the China National Intellectual Property Administration on April 26, 2021 and entitled "MODEL PROCESSING METHOD AND APPARATUS", which is incorporated herein by reference in its entirety.

### TECHNICAL FIELD

Embodiments of this application relate to the field of artificial intelligence technologies, and in particular, to a model processing method and apparatus.

### BACKGROUND

With development of machine learning technologies, artificial intelligence (artificial intelligence, AI) is applied to more scenarios. Artificial intelligence (Artificial Intelligence, AI) is a theory, a method, a technology, or an application system that simulates, extends, and expands human intelligence via a digital computer or a machine controlled by a digital computer, to perceive an environment, obtain knowledge, and use the knowledge to obtain an optimal result. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, so that the machines have functions of perception, inference, and decision-making. Research in the field of artificial intelligence includes robotics, natural language processing, computer vision, decision-making and inference, human-computer interaction, recommendation and search, AI basic theories, and the like.

Currently, common AI frameworks may include an AI framework built in a dynamic graph manner (such as a PyTorch framework) and an AI framework built in a static graph manner (such as a Tensor Flow framework).

The AI framework built in the dynamic graph manner depends on imperative programming. During running, a computational graph of each operator corresponding to the operator included in a machine learning model (which is referred to as a "model" for short below) is first determined. Then, in a model training process, a computational graph of the model is built based on the computational graph of the operator, to train the model.

The AI framework built in the static graph manner depends on declarative programming. During running, a computational graph of an entire model is first generated based on an operator included in the model, and the computational graph is optimized through operator fusion or the like. Then, the model is trained based on an optimized computational graph of the model.

It can be learned that, in the AI framework built in the dynamic graph manner, an intermediate result of each step during model processing is visible, and is characterized by "what you see is what you get". Therefore, the AI framework built in the dynamic graph manner is easy to use and debug, and has higher usability. In addition, in the AI framework built in the static graph manner, the computational graph of the model may be optimized, without building the computational graph of the model in a model training process. Therefore, running efficiency is higher.

Therefore, during actual application, to achieve higher system usability, the AI framework can be built in the dynamic graph manner, but system running efficiency is lower; or to achieve higher system running efficiency, the AI framework can be built in the static graph manner, but system usability is lower. In other words, the existing AI framework is not flexible enough, that is, during actual application, the usability and the running efficiency cannot be compatible, but only one thereof can be met.

### SUMMARY

Embodiments of this application provide a model processing method and apparatus, to resolve a problem that an existing AI framework is not flexible enough.

To achieve the foregoing objective, embodiments of this application provide the following technical solutions.

According to a first aspect, an embodiment of this application provides a model processing method, including: obtaining a machine learning model, where the machine learning model includes a flag bit; determining an operator queue of a first operator in the machine learning model, where the first operator is an operator corresponding to the flag bit in the machine learning model; determining a first computational graph of the operator queue; and training the machine learning model based on the first computational graph. In the foregoing method, the flag bit is set in the machine learning model, so that the operator queue of the first operator (namely, the operator corresponding to the flag bit) can be determined based on the flag bit, and the first computational graph of the operator queue can be determined. Therefore, the machine learning model is trained based on the first computational graph. In this way, in an aspect, the machine learning model may be trained based on the first computational graph determined in the foregoing method, and a computational graph does not need to be built for an operator included in the operator queue in a model training process. This achieves an effect of using a static graph to build an AI framework for the operator in the operator queue. Therefore, running efficiency of a system is ensured. In another aspect, for another operator that does not have a flag bit, the AI framework may be built in another manner (for example, the AI framework is built in a dynamic graph manner), to ensure flexibility of the model training process, and avoid a problem of poor usability in a conventional technology in which only a static graph is used to build the AI framework for the entire model to ensure running efficiency of the system.

In a possible design, the training the machine learning model based on the first computational graph includes: sending the first computational graph to a processing device, so that the processing device trains the machine learning model based on the first computational graph. According to the foregoing design, a model training task can be executed by the processing device, so that a solution implementation process is more flexible.

In a possible design, the method further includes determining a second computational graph of a second operator, where the second operator is an operator in the machine learning model other than the first operator. The training the machine learning model based on the first computational graph includes: training the machine learning model based on the first computational graph and the second computational graph. In the foregoing design, for the operator that is not marked by the flag bit in the machine learning model, a computational graph of a single operator is built for using and the model is trained based on the second computational graph in the model training process. This achieves an effect of using the dynamic graph to build an AI framework for the operator that is not marked by the flag bit in the machine learning model. Therefore, the usability of the system is ensured.

In a possible design, the training the machine learning model based on the first computational graph and the second computational graph includes: sending the first computational graph and the second computational graph to a processing device, so that the processing device trains the machine learning model based on the first computational graph and the second computational graph.

In a possible design, the processing device is any one of a central processing unit CPU, a graphics processing unit GPU, a neural network processing unit NPU, or a tensor processing unit TPU. In the foregoing design, this embodiment of this application can be applied to processors of various types of model training, to achieve an effect of improving flexibility of the AI framework when different types of processors are used.

In a possible design, the machine learning model includes N model layers, where N is a positive integer. In the method, the determining an operator queue of a first operator in the machine learning model includes: converting the N model layers of the machine learning model into a plurality of operators; and determining, from the plurality of operators obtained through conversion, the first operator corresponding to a model layer corresponding to the flag bit, to obtain the operator queue of the first operator. In other words, after the N model layers of the machine learning model are converted into the plurality of operators, the plurality of operators may form an operator flow of the machine learning model. Then, the first operator corresponding to the model layer corresponding to the flag bit may be determined from the operator flow of the machine learning model, to obtain the operator queue of the first operator. According to the foregoing design, the operator queue of the first operator may be determined in a machine learning model having a layered architecture, to subsequently determine the first computational graph of the operator queue and train the model based on the first computational graph.

In a possible design, the flag bit includes a first flag bit and a second flag bit. The first operator is specifically an operator between the first flag bit and the second flag bit in the machine learning model. According to the foregoing design, when writing program code of the machine learning module, a developer can set the first operator for which a static graph AI framework needs to be built. For example, when a static graph AI framework needs to be built for a specific operator queue in the operator flow, the static graph AI framework can be built for the specific operator queue by adding the first flag bit and the second flag bit to two ends of the specific operator queue.

In a possible design, in the foregoing method, the determining a first computational graph of the operator queue includes: building, based on the operator queue, a third computational graph corresponding to the operator queue; and optimizing the third computational graph via a graph engine, to obtain the first computational graph. According to the foregoing design, the model can be trained based on an optimized first computational graph during model training, to avoid resource consumption due to optimization of the computational graph in the model training process, and improve efficiency of the model training process.

According to a second aspect, an embodiment of this application provides a model processing apparatus, including an obtaining unit, a processing unit, and a training unit. The obtaining unit is configured to obtain a machine learning model, where the machine learning model includes a flag bit. The processing unit is configured to determine an operator queue of a first operator in the machine learning model, where the first operator is an operator corresponding to the flag bit in the machine learning model. The processing unit is further configured to determine a first computational graph of the operator queue. The training unit is configured to train the machine learning model based on the first computational graph.

In a possible design, that the training unit is configured to train the machine learning model based on the first computational graph includes: The training unit is specifically configured to send the first computational graph to a processing device, so that the processing device trains the machine learning model based on the first computational graph.

In a possible design, the processing unit is further configured to determine a second computational graph of a second operator, where the second operator is an operator in the machine learning model other than the first operator. That the training unit is configured to train the machine learning model based on the first computational graph includes: The training unit is specifically configured to train the machine learning model based on the first computational graph and the second computational graph.

In a possible design, that the training unit is specifically configured to train the machine learning model based on the first computational graph and the second computational graph includes: The training unit is specifically configured to send the first computational graph and the second computational graph to a processing device, so that the processing device trains the machine learning model based on the first computational graph and the second computational graph. In a possible design, the processing device is any one of a central processing unit CPU, a graphics processing unit GPU, a neural network processing unit NPU, or a tensor processing unit TPU.

In a possible design, the machine learning model includes N model layers, where N is a positive integer. That the processing unit is configured to determine an operator queue of a first operator in the machine learning model includes: The processing unit is specifically configured to convert the N model layers of the machine learning model into a plurality of operators. The processing unit is specifically configured to determine, from the plurality of operators obtained through conversion, the first operator corresponding to a model layer corresponding to the flag bit, to obtain the operator queue of the first operator.

In a possible design, the flag bit includes a first flag bit and a second flag bit. The first operator is specifically an operator between the first flag bit and the second flag bit in the machine learning model.

In a possible design, that the processing unit is configured to determine a first computational graph of the operator queue includes: The processing unit is specifically configured to build, based on the operator queue, a third computational graph corresponding to the operator queue. The processing unit is specifically configured to optimize the third computational graph via a graph engine, to obtain the first computational graph.

According to a third aspect, an embodiment of this application provides a model processing apparatus. The model processing apparatus includes one or more processors, the one or more processors are coupled to one or more memories, and the one or more memories store a computer program. When the one or more processors execute the computer program, the model processing apparatus is enabled to perform the model processing method according to any one of the first aspect or the designs of the first aspect.

According to a fourth aspect, an embodiment of this application provides a chip, where the chip includes a processing circuit and an interface. The processing circuit is configured to invoke and run a computer program stored in the storage medium, to perform the model processing method according to any one of the first aspect or the designs of the first aspect.

According to a fifth aspect, an embodiment of this application provides a computer-readable storage medium. The computer-readable storage medium stores instructions or code. When the instructions or the code is run on a computer, the computer is enabled to perform the model processing method according to any one of the first aspect or the designs of the first aspect.

According to a sixth aspect, an embodiment of this application provides a computer program product. The computer program product includes instructions. When the computer program product runs on a computer, the computer is enabled to perform the model processing method according to any one of the first aspect or the designs of the first aspect.

For technical effects of the second aspect to the sixth aspect, refer to the technical effects brought by the different implementations of the first aspect. Details are not described again.

### BRIEF DESCRIPTION OF DRAWINGS

To illustrate the technical solutions in embodiments of the present invention or in a conventional technology more clearly, the following briefly introduces the accompanying drawings needed for describing embodiments or the conventional technology. It is clear that the accompanying drawings in the following descriptions show merely some embodiments of the present invention, and a person of ordinary skill in the art may still derive other drawings from these accompanying drawings without creative efforts.
FIG. 1 is a schematic diagram of an artificial intelligence main framework according to an embodiment of this application;
FIG. 2 is a first schematic diagram of an AI framework according to an embodiment of this application;
FIG. 3 is a second schematic diagram of an AI framework according to an embodiment of this application;
FIG. 4 is a first schematic diagram of a structure of a model processing apparatus according to an embodiment of this application;
FIG. 5 is a first schematic flowchart of a model processing method according to an embodiment of this application;
FIG. 6 is a third schematic diagram of an AI framework according to an embodiment of this application;
FIG. 7 is a second schematic flowchart of a model processing method according to an embodiment of this application;
FIG. 8 is a schematic diagram of converting a machine learning model into an operator flow according to an embodiment of this application; and
FIG. 9 is a second schematic diagram of a structure of a model processing apparatus according to an embodiment of this application.

### DESCRIPTION OF EMBODIMENTS

The following describes the technical solutions in this embodiment of this application with reference to the accompanying drawings in embodiments of this application. In addition, to clearly describe the technical solutions in embodiments of this application, terms such as "first" and "second" are used to distinguish between same objects or similar objects whose functions and purposes are basically the same, in embodiments of this application. A person skilled in the art may understand that the terms such as "first" and "second" do not limit a quantity or an execution sequence, and the terms such as "first" and "second" do not indicate a definite difference. In addition, in embodiment of this application, a word such as "example" or "for example" is used to represent an example or a description, and a word such as "example" or "for example" is used to present a related concept in a specific manner for ease of understanding.

First, related technologies included in embodiments of this application are described.

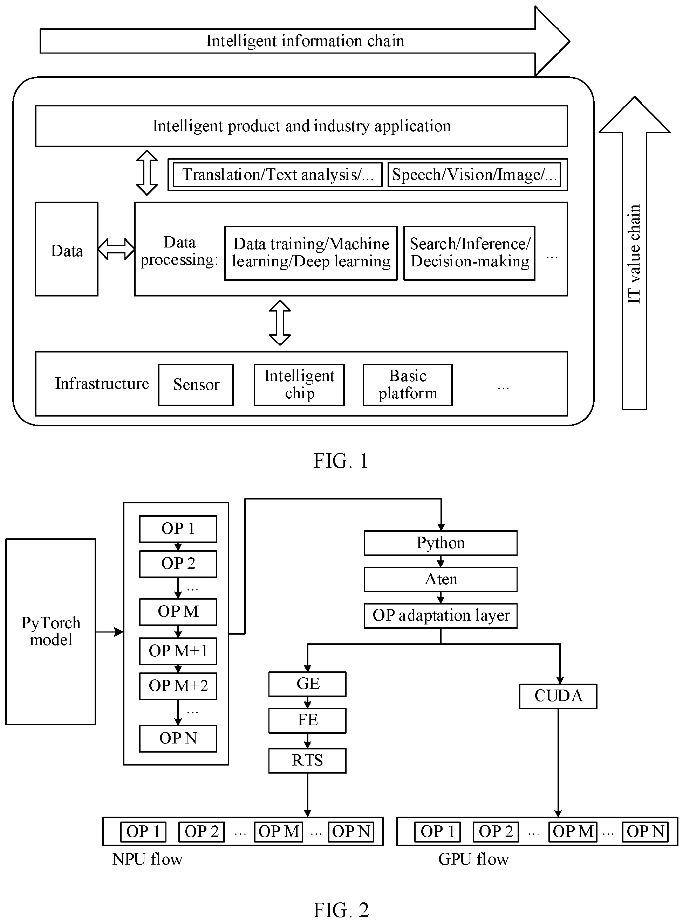

FIG. 1 is a schematic diagram of an artificial intelligence main framework. The main framework describes an overall working procedure of an artificial intelligence system, and is applicable to a requirement of a general artificial intelligence field.

The following describes the artificial intelligence theme framework from dimensions: "intelligent information chain" (horizontal axis) and "IT value chain" (vertical axis).

The "intelligent information chain" reflects a series of processes from obtaining data to processing the data. For example, the "intelligent information chain" may be a general process of intelligent information perception, intelligent information representation and formation, intelligent inference, intelligent decision-making, and intelligent execution and output. In this process, data experiences a refining process of "data-information-knowledge-intelligence".

The "IT value chain" is an industrial ecological process from underlying infrastructure of artificial intelligence to information (providing and processing technical implementations) to a system, and indicates value brought by artificial intelligence to the information technology industry.

### (1) Infrastructure

The infrastructure provides computing power support for the artificial intelligence system, to communicate with the outside world, and implement support via a basic platform. The infrastructure communicates with the outside via a sensor. The computing power is provided by an intelligent chip (a hardware acceleration chip, such as a CPU, an NPU, a GPU, an ASIC, and an FPGA, or the like). The basic platform includes platform assurance and support such as a distributed computing framework and a network, including cloud storage and computing, an interconnection network, and the like. For example, the sensor communicates with the outside to obtain data, and the data is provided, for computing, to an intelligent chip in a distributed computing system provided by the basic platform.

### (2) Data

Data at an upper layer of the infrastructure indicates a data source in the field of artificial intelligence. The data relates tos a graphic, an image, speech, text, and internet of things data of a conventional device, and includes service data of an existing system and perception data such as force, a displacement, a liquid level, temperature, humidity, and the like.

### (3) Data processing

The foregoing data processing usually includes data training, machine learning, deep learning, search, inference, decision-making, and the like.

The machine learning and the deep learning may be used for performing symbolic and formal intelligent information modeling, extraction, preprocessing, training, and the like on the data.

Embodiments of this application are mainly used in a data processing part, for a method of building an AI framework and performing model training before a machine learning model is trained.

The inference is a process of performing machine thinking and solving problems by simulating an intelligent inference mode of humans in a computer or intelligent system by using formal information and according to an inference control policy. Typical functions are searching and matching.

The decision-making is a process of performing decision-making after performing inference on intelligent information, and usually provides classification, sorting, prediction, and other functions.

### (4) General capability

After the foregoing data processing mentioned above is performed on data, some general capabilities may be further formed based on a data processing result. For example, the general capability may be an algorithm or a general system, for example, translation, text analysis, computer vision processing, speech recognition, and image recognition.

### (5) Intelligent product and industry application

The intelligent product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, a smart home, smart health care, smart security protection, autonomous driving, a safe city, a smart terminal, and the like.

Currently, common AI frameworks may include an AI framework built in a dynamic graph manner and an AI framework built in a static graph manner. However, neither the AI framework built in the dynamic graph manner nor the AI framework built in the static graph manner cannot meet dual requirements of usability and running efficiency. Specifically, a well-known dynamic graph AI framework PyTorch is used as an example. As shown in FIG. 2, in a process of processing a model, PyTorch parsing, calling, and distribution are first performed on various PyTorch models (such as classification, detection, segmentation, and speech PyTorch models, and the like), and then the models each are split into an operator flow including several operators (such as an OP 1, an OP 2, ..., an OP M, an OP M+1, an OP M+2, ..., and an OP N in the figure). Then, an operator in the operator flow is distributed via Python, and called by an ATen operator library, to be mapped to an adaptation layer (OP Wrapper) of the operator. Then, for different processing devices (such as a graphics processing unit (graphics processing unit, GPU), a neural network processing unit (neural network processing unit, NPU), a tensor processing unit (tensor processing unit, TPU), a central processing unit (central processing unit, CPU), and the like), the OP Wrapper uses different operator calling paths and delivers a computational graph of the operator to a flow on a processing device side by using an asynchronous calling procedure. For example, in FIG. 2, when a processing device is the NPU, the OP Wrapper may call a graph engine (graph engine, GE) and a fusion engine (fusion engine, FE) and deliver the operator to a flow on a device side to perform an asynchronous flow operation of the operator through a request to send (request to send, RTS) interface. When a processing device is the GPU, the OP Wrapper may call a compute unified device architecture (compute unified device architecture, CUDA) to deliver the operator to a flow on a device side, to perform an asynchronous flow operation of the operator. Therefore, operations such as training, inference, and the like of the entire model are completed.

It can be learned that in the process of processing the dynamic graph AI framework PyTorch, each operator is delivered to the flow on the device side by using the calling procedure, and an intermediate result of each operator is visible. Therefore, in an aspect, the AI framework built in the dynamic graph manner is easy to use and debug, and has higher usability. However, in another aspect, because there is no model-based building and optimization process in the dynamic graph AI framework, the processing device needs to rebuild a computational graph of the model when training the model. Consequently, the dynamic graph AI framework causes a performance loss to some extent, and has low running efficiency.

In a possible manner, to perform static graph building and optimization on the PyTorch model for improving the running efficiency, an accelerated linear algebra (accelerated linear algebra, XLA) compilation framework may be integrated into an AI framework, to implement static graph building and optimization on the PyTorch model. XLA defines a set of advanced intermediate representations (intermediate representations, IRs), namely, high level optimizers (high level optimizers, HLOs).

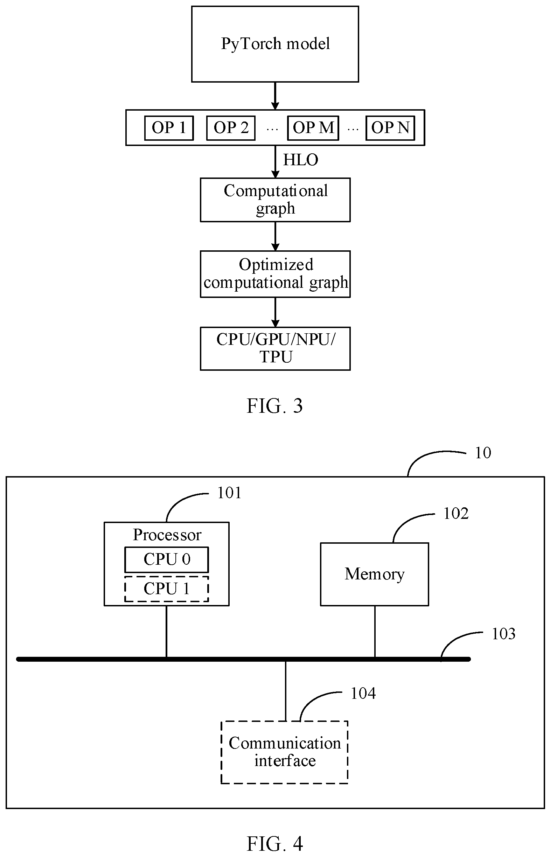

Specifically, after the XLA compilation framework is integrated into the AI framework, a running process of the model is shown in FIG. 3. First, the Pytorch model is split into an operator flow, and then the operator flow is converted into a computational graph represented by the HLO. Then, an optimization procedure such as computational graph fusion in XLA, or the like is called to build a computational graph of a model. Then, the built computational graph is delivered to a processing device (such as a CPU, a GPU, an NPU, and TPU, or the like) to complete operations such as training, inference, and the like of the entire model.

It can be learned that, in an aspect, after the XLA compilation framework is integrated into the AI framework, the computational graph based on the entire model may be built in a PyTorch framework, and then delivered to the processing device (that is, a static computational graph is built). In this way, the static computational graph can be optimized within the AI framework, to improve running efficiency. However, in another aspect, after the XLA compilation framework is integrated into the AI framework, core execution steps (including calling and delivering of the operator) are executed by the XLA compilation framework. Application programming interface (Application Programming Interface, API), calling, and debugging procedures of the XLA and the native PyTorch cannot be flexibly switched, adjusted, and optimized. In addition, computational graph optimization can only be performed on the entire model. Computational graph optimization cannot be performed on a part of the model flexibly. In addition, an intermediate result of each step in a process of processing the model cannot be checked. Consequently, the AI framework is inconvenient to use and debug, and usability is reduced.

For the foregoing cases, embodiments of this application provide a model processing method, to simultaneously meet the usability and the running efficiency of the AI framework.

FIG. 4 shows a model processing apparatus according to an embodiment of this application. In a specific implementation process, the model processing method provided in embodiments of this application may be implemented by the model processing apparatus 10 shown in FIG. 4. The model processing apparatus 10 includes at least one processor 101 and a memory 102. In addition, the model processing apparatus 10 may further include a communication line 103 and a communication interface 104.

The processor 101 is configured to execute computer-executable instructions in the memory 102, to implement the model processing method provided in this application.

Specifically, the processor 101 may be a general-purpose central processing unit (central processing unit, CPU), a microprocessor, an application-specific integrated circuit (application-specific integrated circuit, ASIC), or one or more integrated circuits configured to control program execution of the solutions of this application. In some implementations, the processor 101 may be used to train a machine learning model. In this case, it may be understood as that the model processing apparatus may complete a training process of the machine learning model. In some other implementations, the model processing apparatus may deliver a determined computational graph (for example, a first computational graph of an operator queue and a second computational graph of a single operator in the following descriptions) to a processing device (for example, a CPU, a GPU, an NPU or a TPU) other than the model processing apparatus, so that the processing device trains a machine learning model.

The memory 102 may be a read-only memory (read-only memory, ROM) or another type of static storage device that can store static information and instructions, or a random access memory (random access memory, RAM) or another type of dynamic storage device that can store information and instructions. The memory 102 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or a magnetic disk storage medium or another magnetic storage device, or any other medium that can be configured to carry or store expected program code in a form of an instruction or a data structure and that can be accessed by a computer. However, the memory 102 is not limited thereto. The memory may exist independently and is connected to the processor through the communication line 103. Alternatively, the memory and the processor may be integrated.

The communication line 103 may include a data bus for transferring information between the foregoing components. The communication interface 104 is configured to communicate with another apparatus. For example, when the training process of the machine learning model is performed by the processing device, the model processing apparatus may communicate with the processing device such as the CPU, the GPU, the NPU, the TPU, or the like through the communication interface 104, to deliver a computational graph to a flow of the processing device, so that the processing device completes operations such as training, inference, and the like of the machine learning model. During specific implementation, the model processing apparatus 10 described in this application may be an electronic device such as a personal computer, a portable electronic device, a server, or the like, may be a component of an electronic device (for example, a processor, a chip, or the like of the electronic device), may be a logical module or software that can implement all or some functions of an electronic device, or may be a combination of the foregoing logical module or software and the foregoing component.

In some application scenarios, a hardware structure of the model processing apparatus described in this embodiment of this application may be deployed in a distributed manner. In this case, the model processing apparatus includes one or more computer nodes, and different hardware components or software modules included in the model processing apparatus may be deployed on different computer nodes, to perform the model processing method provided in embodiments of this application.

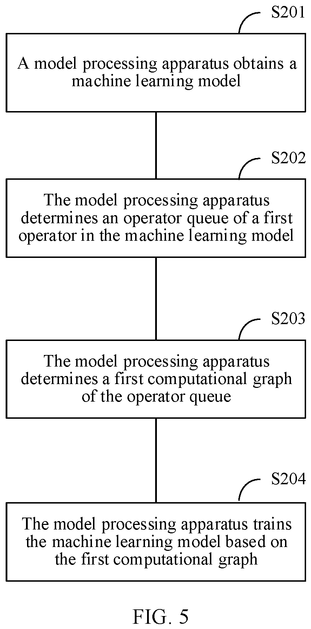

The following describes the model processing method provided in embodiments of this application via the foregoing model processing apparatus as an example. As shown in FIG. 5, the method may include the following steps.

5201. A model processing apparatus obtains a machine learning model.

For example, the machine learning model may be obtained in a manner in which the model processing apparatus obtains program code that is of the machine learning model and that is entered by a user, or in a manner in which the model processing apparatus receives program code that is of the machine learning model and that is sent by another device.

For example, the machine learning model in this embodiment of this application may be a residual network (resnet) proposed by scholars He Kaiming, Ren Shaoqing, Sun Jian, and the like in 2015; a VGG proposed by researchers at Oxford University's computer visual geometry group (visual geometry group) and Google DeepMind in 2014; DenseNet proposed at the IEEE conference on computer vision and pattern recognition 2017 (IEEE conference on computer vision and pattern recognition 2017, CVPR 2017); YOLO proposed by researchers Joseph Redmon and the like in 2016; an SSD proposed at the European conference on computer vision 2016 (European Conference on Computer Vision 2016, ECCV 2016); a Faster RCNN proposed by researchers He Kaiming and the like in 2015 or a Mask RCNN improved based on the Faster RCNN; a Transformer proposed by Google in 2017; a Bert, namely, an NLP model proposed by Google in 2018; a long-short term memory network (Long-Short Term Memory, LSTM) proposed in 1997; a gate recurrent unit (Gate Recurrent Unit, GRU); or the like.

For another example, the machine learning model in this embodiment of this application may be a machine learning model used in various scenarios such as object classification, object detection, content segmentation, and speech and image recognition.

To be specific, a type of the machine learning model may not be limited in this embodiment of this application.

In addition, the machine learning model includes a flag bit.

For example, when entering the program code of the machine learning model, a developer may add the flag bit at a specific location (for example, a location of program code corresponding to an operator for which a static graph needs to be built) to facilitate subsequent processing of the method.

The flag bit may be specifically one or more types of preset characters. A specific form of the flag bit may not be limited in this application.

S202. The model processing apparatus determines an operator queue of a first operator in the machine learning model. The first operator is an operator corresponding to the flag bit in the machine learning model.

The operator in this embodiment of this application may be understood as an operation. Specifically, the machine learning model may be split into several operations, in other words, split into an operator flow including several operators.

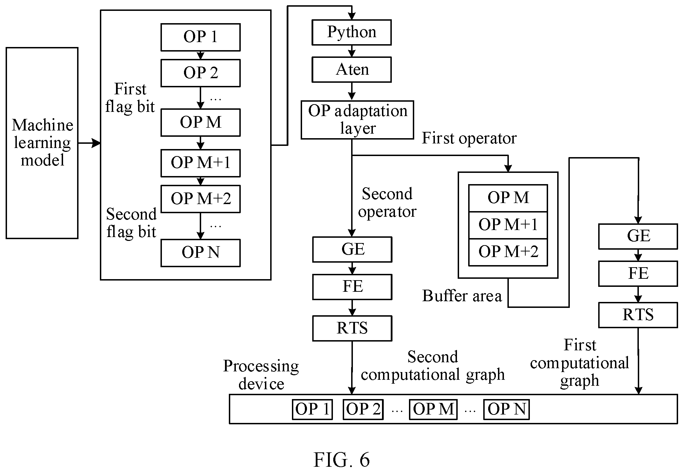

For example, FIG. 6 is a schematic flowchart of a specific implementation process of a method provided in this embodiment of this application with reference to a PyTorch framework. After processing processes such as PyTorch parsing, calling, and distribution, and the like are performed on the machine learning module, the machine learning model is split into an operator flow including operators OP 1, OP 2, ..., OP M, OP M+1, OP M+2, ..., and OP N.

In an implementation, to help determine the operator corresponding to the flag bit in the machine learning model, in this embodiment of this application, the flag bit may include a first flag bit and a second flag bit. The first operator is an operator between the first flag bit and the second flag bit in the machine learning model.

For example, in the operator flow of the machine learning model in FIG. 6, the first flag bit (Graph Trigger) is set before the OP M, and the second flag bit (Graph End) is set after the OP M+2. In this case, it may be determined that first operators corresponding to the flag bit include the OP M, the OP M+1, and the OP M+2. In other words, the operator queue includes the operators OP M, OP M+1, and OP M+2.

It should be noted that, in FIG. 6, for example, a Graph Trigger signal and a Graph End signal are respectively used as the first flag bit and the second flag bit for description. During actual implementation, character content used for the first flag bit and the second flag bit may be set based on a requirement. This may not be limited in this application. In addition, in the foregoing design, operator may be marked by using the first flag bit and the second flag bit, to determine the operator corresponding to the flag bit. In some other designs, the operator may alternatively be marked in another manner. For example, a preset flag bit may be a preset signal, and the operator corresponding to the flag bit may be an operator starting from the preset signal to an end of the model. A specific form of the flag bit may not be limited in this embodiment of this application.

In an implementation, the model processing apparatus may build, during actual implementation, a buffer area configured to store an operator queue. For example, after detecting the first flag bit in the machine learning model, the model processing apparatus starts to store, in the buffer area, an operator corresponding to a model layer located after the first flag bit, until a last operator of a last model layer located before the second flag bit is stored in the buffer area. That is, the operator queue is obtained.

For example, in FIG. 6, after the first operators OP M, OP M+1, and OP M+2 corresponding to the flag bit are distributed by Python, called by an ATEN operator library, and mapped to OP Wrapper, the OP M, the OP M+1, and the OP M+2 are stored to a buffer area OP Queue in a calling sequence to obtain the operator queue.

S203. The model processing apparatus determines a first computational graph of the operator queue.

In this embodiment of this application, a computational graph may be understood as a directed acyclic graph used to describe an operation. In the computational graph, a node may be used to represent data such as a vector, a matrix, or a tensor. A connecting edge between nodes may be used to represent an operation such as addition, subtraction, multiplication, division, or convolution.

A person skilled in the art can easily understand that, in this embodiment of this application, for ease of understanding, the computational graph is described as the directed acyclic graph, but the computational graph is essentially a description for a logical relationship between operations. During actual implementation, the computational graph in the model processing apparatus usually exists in a form of code, and does not need to exist in a form of a picture file. In addition, the computational graph of the operator queue in this embodiment of this application may be understood as a computational graph that is built based on the operator included in the operator queue and that is configured to describe an operation included in the entire operator queue (to be specific, from a start operator to an end operator in the operator queue).

In an implementation, in a process of determining the first computational graph of the operator queue, the computational graph of the operator queue may be optimized to obtain a computational graph having higher running efficiency. Therefore, running efficiency of a system is improved. Therefore, S203 may specifically include:
S2031. The model processing apparatus builds, based on the operator queue, a third computational graph corresponding to the operator queue.

The third computational graph may be an initial computational graph built by the model processing apparatus based on the operator queue.

S2032. The model processing apparatus optimizes the third computational graph via a graph engine GE, to obtain the first computational graph.

For example, the model processing apparatus may call the GE, and perform processing such as combining and splitting on a node in the third computational graph based on a feature of a processor (for example, a CPU, a GPU, an NPU, a TPU, or the like) used in a back-end model training process, so that an optimized first computational graph better matches the back-end model training process, and running efficiency of the training model is improved.

For example, in FIG. 6, when the last first operator is buffered in the OP Queue, the model processing apparatus may build the initial computational graph (namely, the third computational graph) of the operator queue by calling the GE, and optimize the initial computational graph, to obtain the first computational graph of the operator queue.

S204. The model processing apparatus trains the machine learning model based on the first computational graph.

In an implementation, the model processing apparatus may use a functional module that is in the model processing apparatus and that is used for data processing, to train the machine learning model based on the first computational graph. For example, in FIG. 4, the model processing apparatus 20 trains the machine learning model based on the first computational graph via the processor 201. This implementation may be understood as that the model processing apparatus is divided into two modules in terms of hardware or software. One of the two modules (which is referred to as a "first module" for short below) is configured to perform processes such as converting the model into the operator, building the computational graph, and the like. Specifically, the first module may be configured to perform content of S201 to S203 and content of S205 in the following descriptions. The other module (which is referred to as a "second module"for short below) is configured to train the machine learning model. Specifically, the first module may be configured to perform S204. In other words, in this implementation, before the second module starts to train the machine learning module, the first module first determines the first computational graph, so that the second module can train the model by using the first computational graph, to avoid performance consumption due to building of the computational graph during model training.

In another implementation, to improve efficiency, the model processing apparatus may alternatively send the first computational graph to a dedicated processing device, so that the processing device trains the machine learning model. Therefore, S204 may include:
The model processing apparatus sends the first computational graph to the processing device, so that the processing device trains the machine learning model based on the first computational graph.

The processing device may be a hardware device or chip configured to train the machine learning module. In some implementations, the processing device may be any one of the CPU, the GPU, the NPU, or the TPU. Certainly, in some other implementations, the processing device may alternatively be another chip or device other than the foregoing processors.

For example, in FIG. 6, after obtaining the first computational graph of the operator queue by calling the GE, the model processing apparatus calls an FE to optimize memory management (runtime), and delivers the first computational graph to the processing device via RTS, so that the processing device trains the machine learning module based on the first computational graph.

In the foregoing method, the flag bit is set in the machine learning model, so that the operator queue of the first operator (namely, the operator corresponding to the flag bit) can be determined based on the flag bit, and the first computational graph of the operator queue can be determined. Therefore, the machine learning model is trained based on the first computational graph. In this way, in an aspect, the machine learning model may be trained based on the first computational graph determined in the foregoing method, the computational graph does not need to be built for the operator included in the operator queue in the model training process. This achieves an effect of using the static graph to build an AI framework for the operator in the operator queue. Therefore, running efficiency of the system is ensured. In another aspect, for another operator that does not have a flag bit, the AI framework may be built in another manner (for example, the AI framework is built in a dynamic graph manner), to ensure flexibility of the model training process, and avoid a problem of poor usability in a conventional technology in which only a static graph is used to build the AI framework for the entire model to ensure running efficiency of the system.

In an implementation, for the operator that is not marked by the flag bit in the machine learning model, a dynamic graph of the operator may be built to train the model. Therefore, the usability of the system is ensured.

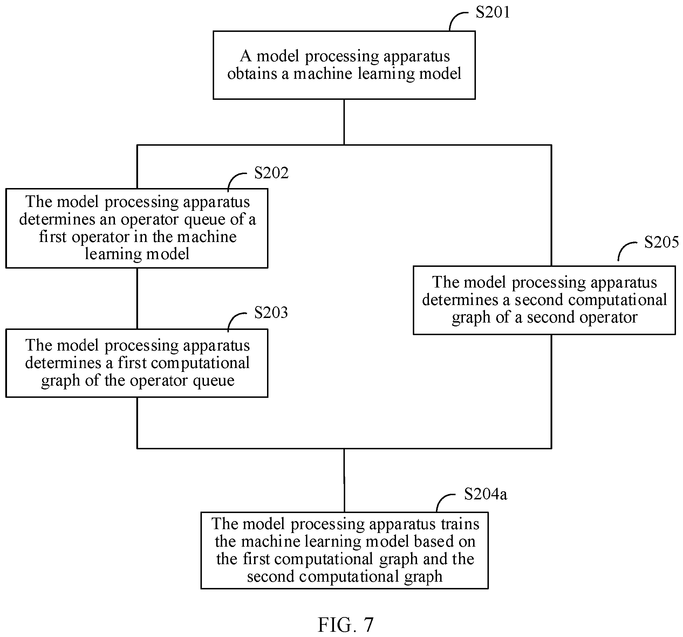

Therefore, as shown in FIG. 7, the method further includes:
S205. The model processing apparatus determines a second computational graph of a second operator.

The second operator is an operator in the machine learning model other than the first operator.

For example, in FIG. 6, after the second operator other than the first operators OP M, OP M+1, and OP M+2 is distributed by Python, called by the ATEN operator library, and mapped to the OP Wrapper, the model processing apparatus may call the GE to perform operations such as computational graph building, optimization, and fusion on the second operator, to obtain the first computational graph of the second operators.

Further, the foregoing S204 includes:
S204a. The model processing apparatus trains the machine learning model based on the first computational graph and the second computational graph.

In an implementation, the model processing apparatus may use a functional module that is in the model processing apparatus and that is used for data processing, to train the machine learning model based on the first computational graph and the second computational graph. Specifically, for an implementation process of using a functional module that is in the model processing apparatus and that is used for data processing, to train the machine learning model based on the first computational graph and the second computational graph, refer to the foregoing descriptions in S204. Details are not described again.

In another implementation, to improve efficiency, the model processing apparatus may alternatively send the first computational graph to a dedicated processing device, so that the processing device trains the machine learning model. Therefore, S204a includes:
The model processing apparatus sends the first computational graph and the second computational graph to the processing device, so that the processing device trains the machine learning model based on the first computational graph and the second computational graph.

For example, in FIG. 6, as described above, after obtaining the first computational graph of the operator queue by calling the GE, the model processing apparatus calls an FE to optimize memory management (runtime), and delivers the first computational graph to the processing device via RTS. After obtaining the second computational graph of the second operators by calling the GE, the model processing apparatus calls the FE to optimize the runtime, and delivers the second computational graph to the processing device via the RTS. Then, after receiving the first computational graph and the second computational graph, the processing device trains the machine learning module based on the first computational graph and the second computational graph.

In an implementation, in this embodiment of this application, the machine learning model may be a layered architecture. To be specific, the machine learning model may be divided into N model layers, where N is a positive integer. Therefore, in S202, the model processing apparatus may determine the operator queue of the first operator in the machine learning model by using the following steps:
S2021. The model processing apparatus converts the N model layers of the machine learning model into a plurality of operators.

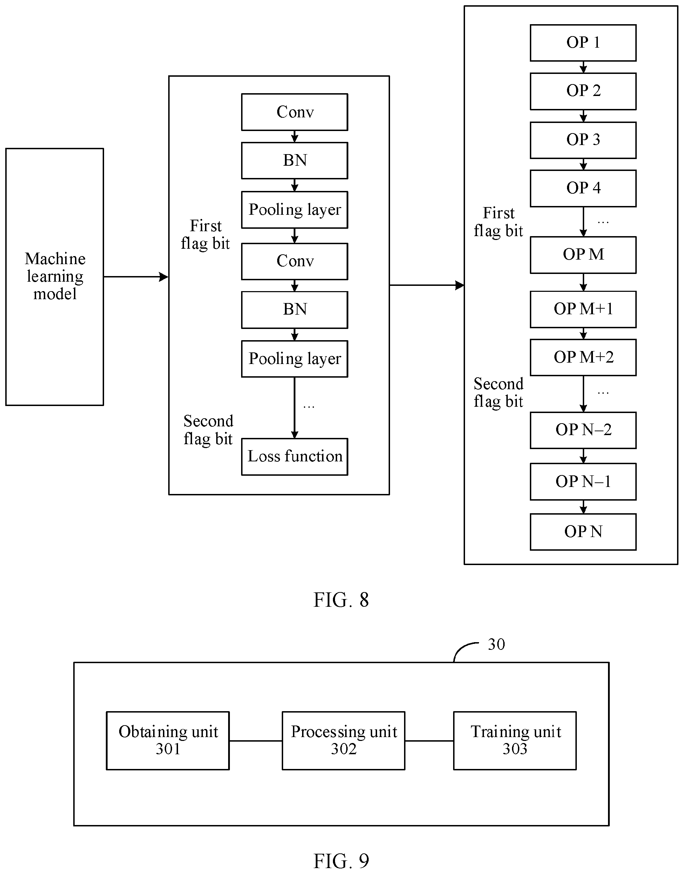

The plurality of operators (where the plurality of operators may form an operator flow of the machine learning model) obtained trough conversion of the N model layers of the machine learning model may include an operator obtained through conversion of each model layer of the N model layers. One model layer in the machine learning model may be converted into one or more operators. For example, the machine learning model is a computer vision (computer vision, CV) model. As shown in FIG. 8, the CV model may include a plurality of model layers, such as a convolution (convolution, Conv) layer, a batch normalization (batch normalization, BN) layer, a pooling (pooling) layer, a loss function (loss function), and the like. Each model layer may be converted into one or more operators. For example, one convolution layer may be converted into one or more convolution operators. Further, after each model layer is successively converted into an operator, an operator flow (for example, an OP 1, an OP 2, an OP 3, an OP 4, ..., an OP M, an OP M+1, an OP M+2, ..., an OP N-2, an OP N-1, and OP N in the figure) of the machine learning model may be obtained.

S2022. The model processing apparatus determines, from the plurality of operators obtained through conversion, the first operator corresponding to a model layer corresponding to the flag bits, to obtain the operator queue of the first operator.

For example, the model layer corresponding to the flag bit may be determined based on the location of the flag bit in the program code of the machine learning model, and then the operator (namely, the first operator) corresponding to the model layer is determined, and the operator queue of the first operator is further obtained. A quantity of operators in the operator queue may be determined based on a quantity of operators included in the model layer corresponding to the flag bit. For example, in the machine learning model in FIG. 8, a first flag bit (Graph Trigger) is set between the 1^{st} pooling layer and the 2^{nd} Conv layer, and a second flag bit (Graph End) is set before the loss function. In this case, it may be determined that model layers corresponding to the flag bit include model layers from the 2^{nd} Conv layer to the loss function. Further, the first operator includes an operator corresponding to the model layers from the 2^{nd} Conv layer to the loss function, for example, operators OP 4 to OP N-2 in the figure.

It may be understood that, to implement a corresponding function, the model processing apparatus includes a corresponding hardware structure and/or a corresponding software module for performing each function. In this embodiment of this application, functional module division is performed on the model processing apparatus based on the foregoing method examples. For example, each functional module may be divided for each function. In addition, two or more functions may be integrated into one module. The integrated module may be implemented in a form of hardware, or may be implemented in a form of a software function module. Optionally, the module division in embodiments of this application is an example, and is merely logical function division. In actual implementation, there may be another division manner.

For example, FIG. 9 is a schematic diagram of composition of a model processing apparatus according to an embodiment of this application. The model processing apparatus 30 may be a chip or a system on chip. Alternatively, the model processing apparatus 30 may be a distributed system that includes one or more computer nodes. Different hardware components or software modules included in the model processing apparatus may be deployed on different computer nodes, to perform the model processing method provided in embodiments of this application. Alternatively, the model training apparatus 30 may be a software function that can implement the foregoing model processing method, or a virtualization function instantiated on a platform (for example, a cloud platform). The model training apparatus 30 may be configured to perform the model training method provided in the foregoing embodiment. In an implementation, the model training apparatus 30 may include an obtaining unit 301, a processing unit 302, and a training unit 303.

The obtaining unit 301 is configured to obtain a machine learning model, where the machine learning model includes a flag bit.

The processing unit 302 is configured to determine an operator queue of a first operator in the machine learning model, where the first operator is an operator corresponding to the flag bit in the machine learning model.

The processing unit 302 is further configured to determine a first computational graph of the operator queue.

The training unit 303 is configured to train the machine learning model based on the first computational graph.

Optionally, that the training unit 303 is configured to train the machine learning model based on the first computational graph includes:
The training unit 303 is specifically configured to send the first computational graph to a processing device, so that the processing device trains the machine learning model based on the first computational graph.

The processing unit 302 is further configured to determine a second computational graph of a second operator, where the second operator is an operator in the machine learning model other than the first operator.

That the training unit 303 is configured to train the machine learning model based on the first computational graph includes: The training unit is specifically configured to train the machine learning model based on the first computational graph and the second computational graph.

Optionally, that the training unit 303 is specifically configured to train the machine learning model based on the first computational graph and the second computational graph includes:
The training unit 303 is specifically configured to send the first computational graph and the second computational graph to a processing device, so that the processing device trains the machine learning model based on the first computational graph and the second computational graph.

Optionally, the processing device is any one of a central processing unit CPU, a graphics processing unit GPU, a neural network processing unit NPU, or a tensor processing unit TPU.

Optionally, the machine learning model includes N model layers, where N is a positive integer.

That the processing unit 302 is configured to determine an operator queue of a first operator in the machine learning model includes:
The processing unit 302 is specifically configured to convert the N model layers of the machine learning model into a plurality of operators.

The processing unit 302 is specifically configured to determine, from the plurality of operators obtained through conversion, the first operator corresponding to a model layer corresponding to the flag bit, to obtain the operator queue of the first operator.

Optionally, the flag bit includes a first flag bit and a second flag bit. The first operator is specifically: an operator between the first flag bit and the second flag bit in the machine learning model.

Optionally, that the processing unit 302 is configured to determine a first computational graph of the operator queue includes:
The processing unit 302 is specifically configured to build, based on the operator queue, a third computational graph corresponding to the operator queue.

The processing unit 302 is specifically configured to optimize the third computational graph via a graph engine, to obtain the first computational graph.

An embodiment of this application further provides a chip. The chip includes a processing circuit and an interface. The processing circuit is configured to invoke and run a computer program stored in the storage medium, to perform the foregoing model processing method.

An embodiment of this application further provides a computer-readable storage medium. The computer-readable storage medium stores instructions or code. When the instructions or the code are run on a computer, the computer is enabled to perform the foregoing model processing method.

An embodiment of this application further provides a computer program product. The computer program product includes instructions. When the computer program product is run on a computer, the computer is enabled to perform the foregoing model processing method.

All or some of the functions, actions, operations, steps, or the like in the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application has been described with reference to specific features and embodiments thereof, it is obvious that various modifications and combinations may be made to this application without departing from the spirit and scope of this application. Correspondingly, the specification and the accompanying drawings are merely example descriptions of this application defined in the appended claims, and are considered as any of or all modifications, variations, combinations, or equivalents that cover the scope of this application. Obviously, a person skilled in the art can make various modifications and variations to this application without departing from the spirit and scope of this application. Therefore, this application is intended to cover these modifications and variations of this application provided that they fall within the scope of protection defined in the following claims and their equivalent technologies.

## Claims

1. A model processing method, comprising:
obtaining a machine learning model, wherein the machine learning model comprises a flag bit;
determining an operator queue of a first operator in the machine learning model, wherein the first operator is an operator corresponding to the flag bit in the machine learning model;
determining a first computational graph of the operator queue; and
training the machine learning model based on the first computational graph.

2. The method according to claim 1, wherein the training the machine learning model based on the first computational graph comprises:
sending the first computational graph to a processing device, so that the processing device trains the machine learning model based on the first computational graph.

3. The method according to claim 1, wherein the method further comprises:
determining a second computational graph of a second operator, wherein the second operator is an operator in the machine learning model other than the first operator; and
the training the machine learning model based on the first computational graph comprises:
training the machine learning model based on the first computational graph and the second computational graph.

4. The method according to claim 3, wherein the training the machine learning model based on the first computational graph and the second computational graph comprises:
sending the first computational graph and the second computational graph to a processing device, so that the processing device trains the machine learning model based on the first computational graph and the second computational graph.

5. The method according to claim 2 or 4, wherein the processing device is any one of a central processing unit CPU, a graphics processing unit GPU, a neural network processing unit NPU, or a tensor processing unit TPU.

6. The method according to any one of claims 1 to 5, wherein the machine learning model comprises N model layers, wherein N is a positive integer; and the determining an operator queue of a first operator in the machine learning model comprises:
converting the N model layers of the machine learning model into a plurality of operators; and
determining, from the plurality of operators obtained through conversion, the first operator corresponding to a model layer corresponding to the flag bit, to obtain the operator queue of the first operator.

7. The method according to any one of claims 1 to 6, wherein the flag bit comprises a first flag bit and a second flag bit; and
the first operator is specifically an operator between the first flag bit and the second flag bit in the machine learning model.

8. The method according to any one of claims 1 to 7, wherein the determining a first computational graph of the operator queue comprises:
building, based on the operator queue, a third computational graph corresponding to the operator queue; and
optimizing the third computational graph via a graph engine, to obtain the first computational graph.

9. A model processing apparatus, comprising an obtaining unit, a processing unit, and a training unit, wherein
the obtaining unit is configured to obtain a machine learning model, wherein the machine learning model comprises a flag bit;
the processing unit is configured to determine an operator queue of a first operator in the machine learning model, wherein the first operator is an operator corresponding to the flag bit in the machine learning model;
the processing unit is further configured to determine a first computational graph of the operator queue; and
the training unit is configured to train the machine learning model based on the first computational graph.

10. The model processing apparatus according to claim 9, wherein that the training unit is configured to train the machine learning model based on the first computational graph comprises:
the training unit is specifically configured to send the first computational graph to a processing device, so that the processing device trains the machine learning model based on the first computational graph.

11. The model processing apparatus according to claim 9, wherein
the processing unit is further configured to determine a second computational graph of a second operator, wherein the second operator is an operator in the machine learning model other than the first operator; and
that the training unit is configured to train the machine learning model based on the first computational graph comprises: the training unit is specifically configured to train the machine learning model based on the first computational graph and the second computational graph.

12. The model processing apparatus according to claim 11, wherein that the training unit is specifically configured to train the machine learning model based on the first computational graph and the second computational graph comprises:
the training unit is specifically configured to send the first computational graph and the second computational graph to a processing device, so that the processing device trains the machine learning model based on the first computational graph and the second computational graph.

13. The model processing apparatus according to claim 10 or 12, wherein the processing module is any one of a central processing unit CPU, a graphics processing unit GPU, a neural network processing unit NPU, or a tensor processing unit TPU.

14. The model processing apparatus according to any one of claims 9 to 13, wherein the machine learning model comprises N model layers, wherein N is a positive integer; and that the processing unit is configured to determine an operator queue of a first operator in the machine learning model comprises:
the processing unit is specifically configured to convert the N model layers of the machine learning model into a plurality of operators; and
the processing unit is specifically configured to determine, from the plurality of operators obtained through conversion, the first operator corresponding to a model layer corresponding to the flag bit, to obtain the operator queue of the first operator.

15. The model processing apparatus according to any one of claims 9 to 14, wherein the flag bit comprises a first flag bit and a second flag bit; and
the first operator is specifically an operator between the first flag bit and the second flag bit in the machine learning model.

16. The model processing apparatus according to any one of claims 9 to 15, wherein that the processing unit is configured to determine a first computational graph of the operator queue comprises:
the processing unit is specifically configured to build, based on the operator queue, a third computational graph corresponding to the operator queue; and
the processing unit is specifically configured to optimize the third computational graph via a graph engine, to obtain the first computational graph.

17. A model processing apparatus, wherein the model processing apparatus comprises one or more processors, the one or more processors are coupled to one or more memories, and the one or more memories store a computer program; and
when the one or more processors execute the computer program, the model processing apparatus is enabled to perform the model processing method according to any one of claims 1 to 8.

18. A chip, wherein the chip comprises a processing circuit and an interface, and the processing circuit is configured to invoke and run a computer program stored in a storage medium, to perform the model processing method according to any one of claims 1 to 8.

19. A computer-readable storage medium, wherein the computer-readable storage medium stores instructions or code; and when the instructions or code is run on a computer, the computer is enabled to perform the model processing method according to any one of claims 1 to 8.

20. A computer program product, wherein the computer program product comprises instructions; and when the computer program product runs on a computer, the computer is enabled to perform the model processing method according to any one of claims 1 to 8.
